# EUROPEAN PATENT SPECIFICATION

(11) **EP 1 352 693 B1**
(45) Date of publication and mention of the grant of the patent: **06.12.2006**
(21) Application number: 03007888.5
(22) Date of filing: 07.04.2003
(51) Int. Cl.: B09B 5/00, B02C 18/12, B02C 23/24

(54) **Method and apparatus for pulverizing container containing powder**
Verfahren und Vorrichtung zum Zerkleinern eines Pulver enthaltenden Behälters
Méthode et appareil pour la pulvérisation d'une récipient contenant de la poudre

(30) Priority: 10.04.2002 JP 2002108224; 07.08.2002 JP 2002229906
(43) Date of publication of application: 15.10.2003
(73) Proprietor: CANON KABUSHIKI KAISHA, Ohta-ku, Tokyo (JP)
(72) Inventor: Koumura, Noboru, c/o Canon Kabushiki Kaisha, Tokyo (JP); Konno, Nagatoshi, c/o Canon Kabushiki Kaisha, Tokyo (JP); Kato, Seiichi, c/o Canon Kabushiki Kaisha, Tokyo (JP)
(74) Representative: Weser, Wolfgang

(56) References cited:
- DE-A- 19 520 365
- US-B1- 6 311 904
- PATENT ABSTRACTS OF JAPAN vol. 2000, no. 24, 11 May 2001 (2001-05-11) & JP 2001 205245 A (CANON CHEMICALS INC), 31 July 2001 (2001-07-31)
- PATENT ABSTRACTS OF JAPAN vol. 2000, no. 13, 5 February 2001 (2001-02-05) & JP 2000 280174 A (NAKANO ICHIRO), 10 October 2000 (2000-10-10)
- PATENT ABSTRACTS OF JAPAN vol. 1997, no. 10, 31 October 1997 (1997-10-31) & JP 9 150137 A (RICOH CO LTD), 10 June 1997 (1997-06-10)

## Description

### FIELD OF THE INVENTION

The present invention relates to a method and apparatus for pulverizing a container containing a powder and, more particularly, to a household electric appliance recycling technique for pulverizing a toner cartridge of an image forming apparatus and collecting various materials such as toner, plastic materials, metal materials, and rubber materials.

### BACKGROUND OF THE INVENTION

The process of collecting containers containing toner as an image forming material for use in image forming apparatuses such as copying machines and laser beam printers must be performed by taking influence on human bodies into consideration, since toner is a very fine powder.

If toner containers supplied to the market are directly discarded, a dust problem arises in processing plants. Especially when containers containing toner are pulverized as collected dust, dust explosion of the processing apparatus may be induced.

To prevent this, only toner containers are accumulated and collected, and the collected containers are manually or automatically disassembled and recycled. In this case, increasing the efficiency of the process is a problem.

A technique related to a method of processing toner-containing parts and units is disclosed in, e.g., Japanese Patent Laid-Open No. 9-150137.

Also, a technique pertaining to recycling, particularly, pulverization of plastic molded products and electric products is disclosed in, e.g., Japanese Patent Laid-Open No. 08-215591 (Patent No. 2704503).

Toner used in an image forming apparatus is a very fine powder. If this fine powder is placed in a closed space and environmental conditions under which sparks can be generated are complete, dust explosion may be induced. A technique concerning this dust explosion is disclosed in, e.g., Japanese Patent Laid-Open No. 2000-280174. See also US-B-6 311 904.

### SUMMARY OF THE INVENTION

It is the first object of the present invention to avoid the generation of sparks of metal parts caused by pulverizing force when pulverization is performed to disassemble a used cartridge, e.g., a toner cartridge, containing a fine powder such as toner, and to avoid the possibility of dust explosion by processing in the toner and atmospheric ambient, in order to disassemble the toner cartridge, sort the disassembled parts, and recycle the materials.

For this purpose, during the pulverization process the ambient condition is set to an inert ambient and toner is collected by suction.

The present inventors made extensive studies and found that the present invention suppressed dust explosion, increased the efficiency of toner collection, and achieved good results in the material sorting process after that.

However, large numbers of copying machines and printers are widespread, so a large processing volume and high processing efficiency are being required for toner cartridge recycling.

Accordingly, it is the second object of the present invention to increase the cartridge processing amount in pulverization, and improve the toner removal performance in sorting after the pulverization process.

Furthermore, the present invention is not limited to the method of pulverizing a toner-containing cartridge (container) of an image forming apparatus, but solves problems, caused by dust, of containers containing powders in various fields such as business machines, industrial machines, and household electric appliances.

These objects are achieved by the method of pulverizing a container containing a powder according to claim 1, the use of said method for pulverizing a cartridge containing toner according to claim 9 and the apparatus for pulverizing a container containing a powder according to claim 11. The other claims relate to further developments.

Presently, the information communication technologies are advancing significantly. The present invention can propose a processing method which is essential as an environmental countermeasure for a printer which takes part in this advance of the technologies.

Also, with respect to the development of information communication apparatuses, the present invention can contribute to recycling of these apparatuses through the processing method according to the invention.

Other objects and advantages besides those discussed above shall be apparent to those skilled in the art from the description of a preferred embodiment of the invention which follows. In the description, reference is made to accompanying drawings, which form a part thereof, and which illustrate an example of the invention. Such example, however, is not exhaustive of the various embodiments of the invention, and therefore reference is made to the claims which follow the description for determining the scope of the invention.

### BRIEF DESCRIPTION OF THE DRAWINGS

Fig. 1 schematically shows the arrangement of an apparatus according to the first embodiment of the present invention;
Figs. 2 to 5 illustrate the process of the apparatus shown in Fig. 1;
Fig. 6 shows control blocks of the apparatus shown in Fig. 1; and
Fig. 7 schematically shows the arrangement of an apparatus according to the second embodiment of the present invention.

### DETAILED DESCRIPTION OF THE PREFERRED EMBODIMENTS

### [First Embodiment]

### (Explanation of Apparatus Arrangement)

The first embodiment for achieving the first object of the present invention will be described below with reference to the accompanying drawings.

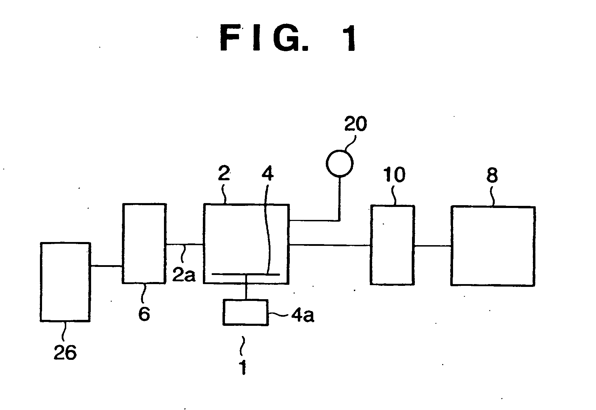

Fig. 1 is a view schematically showing an apparatus of the first embodiment of the present invention.

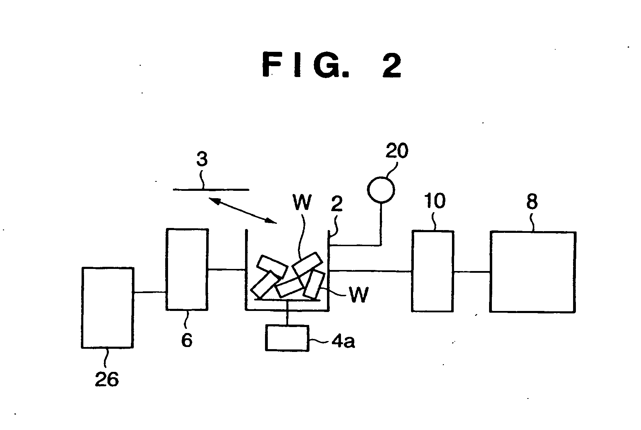

Figs. 2 to 5 are views for explaining the process of practicing the present invention by using the apparatus shown in Fig. 1.

In Fig. 1, reference numeral 1 denotes a pulverizing apparatus; and 2, a pulverizing vessel of the pulverizing apparatus. The pulverizing vessel 2 accommodates containers containing a powder to be pulverized, units, parts, and like.

The pulverizing vessel 2 is made of a metal material and so designed as to have strength with which this pulverizing vessel can stand physical impact when a product to be pulverized is pulverized in the vessel.

Reference numeral 4 denotes a pulverizing blade which is rotated by a driving means 4a installed outside the pulverizing vessel. The pulverizing blade 4 rotates a product to be pulverized placed in the pulverizing vessel and pulverizes the product by the impact force of the blade.

Reference numeral 6 denotes a dust collector which collects by suction a powder contained in a product to be pulverized. The dust collector 6 is connected to a powder suction hole 2a of the pulverizing vessel 2.

Reference numeral 8 denotes an inert gas generator; and 10, an inert gas supplier.

In this embodiment, nitrogen gas is used as an inert gas.

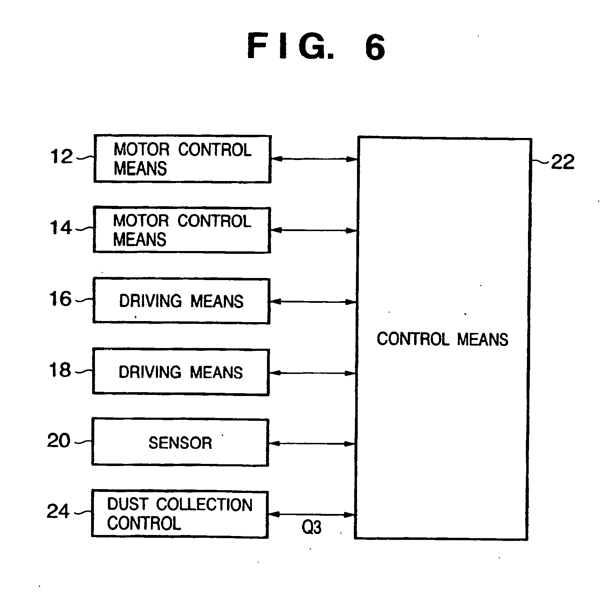

Fig. 6 is a block diagram showing control blocks for controlling driving of the individual parts of the pulverizing apparatus 1 described above.

Reference numeral 12 denotes a motor control means for controlling the rotation of a motor as a driving source of the driving means 4a; 14, a motor control means for a suction driving source of the dust collector 6; 16, a driving means of the gas generator 8; 18, a driving means of the gas supplier 10; and 20, a sensor of an oxygen densitometer.

Reference numeral 22 denotes an overall control means for controlling these control means.

### (Explanation of Product to be Pulverized)

A product to be pulverized by the pulverization method and apparatus of this embodiment is a container containing a powder. In particular, main products to be pulverized are toner containers W (toner cartridges) of image forming apparatuses, e.g., copying machines and printers (laser beam printers) manufactured and sold by the present applicant.

These toner containers W are a kind of expendable replaceable units. A printer user discards a toner container after using up the toner, or discards an unused toner container. These toner containers cannot be discarded as general waste products.

That is, the main constituent members of the body of this toner container W are plastic materials which do not naturally decompose without harming the environment, if they are discarded under ground or water or in natural conditions.

Furthermore, the container pulverization method according to the present invention is not limited to the aforementioned method of pulverizing a toner-containing cartridge (container) of an image forming apparatus, but solves problems, caused by dust, of containers containing powders in various fields such as office machines, industrial machines, and household electric appliances.

### (Explanation of Pulverization Process)

A pulverization process will be described below with reference to Figs. 2 to 5.

First, as shown in Fig. 2, a cover 3 of the pulverizing vessel 2 is opened, and toner containers W to be pulverized are accommodated in the pulverizing vessel 2. The number of the toner containers W to be accommodated is determined on the basis of the volume of the pulverizing vessel 2, the pulverizing ability of the blade 4, and the type of the toner container W to be pulverized.

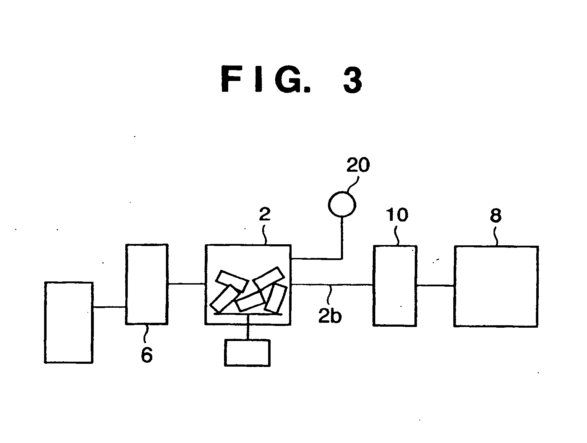

Next, as shown in Fig. 3, the cover 3 of the pulverizing vessel 2 is closed, and nitrogen manufactured by the nitrogen gas generator 8 as an inert gas generator described above is supplied into the pulverizing vessel 2 from the nitrogen gas supplier 10 through a supply port 2b.

A gas supply amount Q2 is adjusted under the control of the driving means 18 of the gas supplier, in accordance with the volume of the pulverizing vessel 2 and the amount (number) of the charged toner containers W.

The control means 24 of the dust collector 6 controls an exhaust amount Q3 of the ambient gas in the pulverizing vessel 2, in accordance with conditions such as the number of the toner containers W charged in the pulverizing vessel 2, and the volume of the pulverizing vessel 2.

The rotational speed of the blade 4 of the pulverizing means is determined by, e.g., the number of the toner containers W to be pulverized, the volume of the vessel, and the construction of the toner container.

The pulverizing condition settings are changed in accordance with the internal mechanism of the toner container W, and the types of materials used (e.g., the types and ratios of plastic materials, metal materials, rubber materials, paper materials, and some other materials).

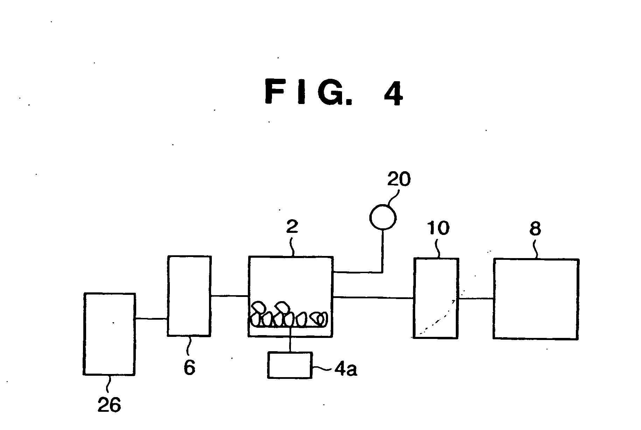

After the conditions are completely set by the control means described above, as shown in Fig. 4, the blade 4 of the pulverizing means is rotated to pulverize the toner containers W in the pulverizing vessel 2.

By this rotation of the blade 4, the toner containers W in the pulverizing vessel 2 are rotated and at the same time thrown and collided against the inner walls of the pulverizing vessel 2. In this manner, the structures of the toner containers W are destroyed.

Simultaneously, toner contained in the toner containers W fills the pulverizing vessel 2 as the toner containers W are destroyed.

The composition of toner used in a copying machine or laser beam printer contains a binder resin, coloring material, offset preventing material, flowability improving material, cleaning assistant, and the like. Therefore, dust explosion may occur owing to the generation of sparks caused by collision between pulverized metal materials and the pulverizing vessel inner walls when toner containers are pulverized in the pulverizing vessel, and owing to the presence of oxygen in air.

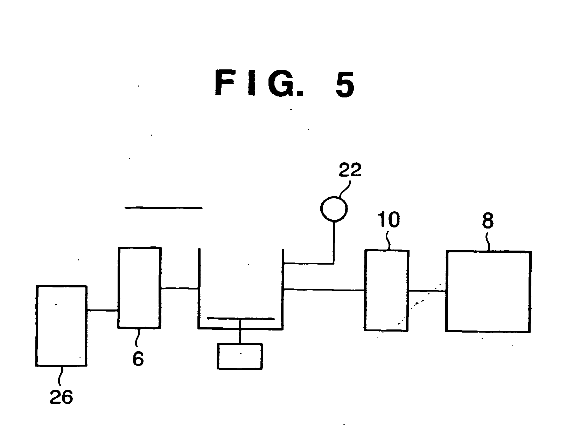

To prevent this dust explosion, as shown in Fig. 5, nitrogen gas is supplied and the ambient gas containing air, toner, and nitrogen gas in the pulverizing vessel 2 is exhausted in order to hold the oxygen concentration and toner concentration in the pulverizing vessel 2 at predetermined concentrations or lower.

As described previously, the condition settings of adjustment of the gas supply amount, the exhaust amount of the pulverizing vessel ambient gas, and the oxygen concentration in the pulverizing vessel are changed in accordance with the volume of the vessel 2, the type of toner container, and the like.

In this embodiment, dust explosion was suppressed by controlling the oxygen concentration to 10% or less by densitometer measurement, in accordance with the toner composition, the conditions of the generation of sparks caused by the metal materials forming the toner container, and the like.

This was accomplished by measuring the output from the oxygen densitometer installed in the pulverizing vessel, and controlling the nitrogen gas supply amount Q2 and the exhaust amount Q3 from the pulverizing vessel so that a relation Q2 ≧ Q3 holds at any instant.

When toner cartridges are pulverized in the pulverizing vessel, toner-containing portions of the toner cartridges are disassembled, and toner particles are scattered. The scattered toner is exhausted as it is mixed with supplied nitrogen gas, and the oxygen concentration in the vessel is decreased to 10% or less. As a consequence, dust explosion is prevented.

While dust explosion in the pulverizing vessel is prevented under the above conditions, pulverization of the toner containers progresses. At the same time, the ambient gas in the pulverizing vessel 2 is exhausted, and an ambient gas G1 collected by the dust collector 6 is sorted into nitrogen and toner by a filter device 26 or the like, thereby collecting the toner.

The structures of the pulverized toner containers are disassembled in the pulverizing vessel into pulverized pieces having a predetermined size.

These pulverized pieces are plastic portions, metal portions, and other constituent material portions of the bodies of the toner containers.

The size of pieces is determined on the basis of conditions such as the rotational speed of the blade 4 of the pulverizing means, the magnitude of the impact force, which depends upon the volume of the pulverizing vessel, when the pulverized containers are collided against the inner walls of the pulverizing vessel by the rotation of the blade, breaking by collision between the pulverized pieces, and the rotation time of the blade 4.

The size of pulverized pieces is preferably determined in accordance with the type of processing after the toner containers are pulverized into pieces.

Although the structural rigidity of the blade 4 is necessary for condition setting, this rigidity need only be much larger than that of the toner container.

If pulverization is performed such that the pulverized pieces have small dimensions, fine plastic pieces remain, and this makes post-processing difficult to perform.

Dust explosion was prevented by the set oxygen concentration in the pulverizing vessel, even when the residual amount in toner-containing portions of toner containers was large.

### (Condition Settings in Embodiment)

The above-mentioned conditions practiced in this embodiment are as follows.

| Product to be pulverized | Toner cartridge |
|---|---|
| Charge amount of product to be pulverized | 10 to 20 kg |
| Volume of pulverizing vessel | 500 liters |
| Number of blade | 1 |
| Rotational speed of blade | 1,500 rpm |
| Rotation time of blade | 20 sec |
| Nitrogen gas supply amount Q2 | 6.0 Nm³/min |
| Dust flow rate | 6.0 Nm³/min |
| Upper limit of oxygen concentration in pulverizing vessel | 10% or less |

Pulverization is performed under the above condition settings. The toner collection amount can be increased by continuously exhausting the ambient gas in the pulverizing vessel and collecting toner in the pulverizing vessel even after the supply of nitrogen gas is stopped after the elapse of the predetermined blade rotation time.

### [Second Embodiment]

The second embodiment for achieving the second object of the present invention will be described below with reference to the accompanying drawings.

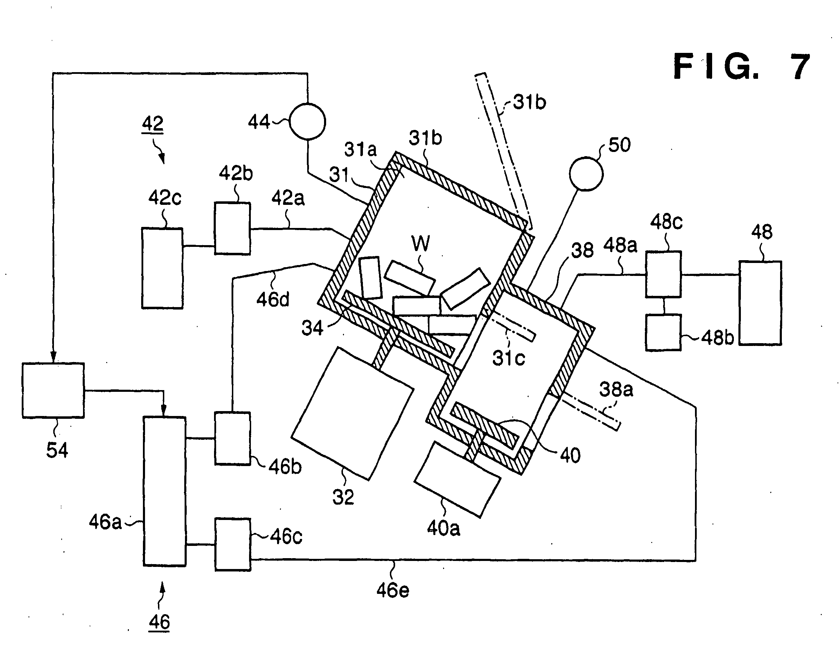

Fig. 7 shows the main parts of an apparatus according to the second embodiment of the present invention.

In this embodiment, an object to be pulverized is a toner cartridge of a copying machine.

In Fig. 7, reference numeral 31 denotes a vessel of a pulverizing apparatus. In the vessel 31, a rotary blade 34 rotated by a driving means 32 is installed, and a volume space 31a for accommodating a plurality of cartridges W to be pulverized is formed.

This pulverizing vessel 31 is mounted on a base (not shown) to make an inclination angle of 30° (±5°) with the horizontal surface of the base.

Reference numeral 31b denotes an upper cover of the vessel.

The pulverizing vessel 31 is attached to a powder separation chamber 38 via a communication door 31c.
The separation chamber 38 is also installed at the same inclination angle as the pulverizing vessel.

Reference numeral 38a denotes the door of the separation chamber.

A separating means 40 separates a powder staying in a product to be pulverized placed in the separation chamber 38. In this embodiment, the separating means 40 is a rotary blade.

The rotary blade 40 is driven by a driving means 40a.

A powder (toner) collecting means 42 connected to the pulverizing vessel 31 is made up of, e.g., a connecting pipe 42a, dust collecting means 42b, and filter 42c.

An oxygen concentration measuring means 44 measures information from a concentration sensor installed in the vessel 31.

An inert gas supply means 46 supplies a gas from a nitrogen gas generating means 46a to the vessel 31 and separation chamber 38 through gas supply means 46b and 46c and supply pipes 46d and 46e, respectively.

Reference numeral 48 denotes a means for collecting a powder separated from a product to be pulverized. The means 48 is made up of, e.g., a connecting pipe 48a, dust collector 48b, and filter 48c.

Reference numeral 50 denotes an oxygen concentration measuring means of the separation chamber 38.

The specifications of the apparatus having the arrangement shown in Fig. 7 are as follows.

| Material of vessel 1 | SUS (Stainless Steel) |
|---|---|
| Volume of vessel 1 | about 0.6 m³ |
| Inclination angle of vessel 1 | 30° (±5°) |
| Material of pulverizing blade | SUS |
| Rotational speed of pulverizing blade | 1,300 to 1,600 rpm |
| Type of concentration sensor | Zirconia type |
| Type of inert gas | Nitrogen gas |
| Supply amount of nitrogen gas | 120 m³/hour |
| Collecting capability of dust collector 12 | 5 m³/min |
| Material of separation chamber 8 | SUS |
| Volume of separation chamber 8 | 0.2 m³ |

The operation of the apparatus shown in Fig. 7 will be described below on the basis of the above specifications.

First, a plurality of used toner cartridges W collected from the market are charged into the pulverizing vessel 3, and the cover 31b is closed.

When the cover 31b is closed, the ambient in the vessel 31 is the atmosphere.

At the same time the cover 31b is closed and the dust collecting means 42 starts operating, nitrogen gas is supplied into the vessel by the inert gas supply means 46b.

Before pulverization is started by the pulverizing blade 34, the oxygen concentration in the pulverizing vessel 31 is checked by measuring a signal from an oxygen concentration measurement sensor by the measuring means 44.

On the basis of a signal from the measuring means 44, a control means 54 controls the oxygen concentration in the vessel 31 to 10% or less by adjusting the supply amount of nitrogen gas from the inert gas supply means 46.

After the oxygen concentration is adjusted, the pulverizing blade 34 starts rotating to pulverize the cartridges W.

By this rotation of the pulverizing blade 34, the cartridges in the vessel are broken as they are collided against the inner surrounding walls of the vessel by the blade, and the cartridge shapes are destroyed into pieces.

By this cartridge pulverization, toner in the cartridges is scattered outside the cartridges to fill the pulverizing vessel 31. The scattered toner is sequentially collected by the dust collecting means 42.

The size of pulverized pieces of the cartridges pulverized in the pulverizing vessel 31 is determined on the basis of the pulverizing capability of the rotary blade 34.

External parts and internal parts of the main components of a container of the cartridge are principally made of plastic materials. However, various materials are used as components, e.g., rubber rollers, metal parts, and gear parts, of the cartridge.

Those parts of the cartridge, which accommodate toner are made of plastic materials, so the degree of cartridge pulverization in the pulverizing vessel 31 is determined to pulverize plastic parts of cartridge components into certain dimensions. In this manner, toner accommodating parts are pulverized to extract internal toner to the outside, and this toner is collected by the dust collecting means 42.

In this embodiment, a plurality of cartridges (17 kg as a supply amount) were charged into the pulverizing vessel 31 under the specification conditions described above, and these cartridges were pulverized at a pulverizing blade rotational speed of 1,400 rpm for 20 sec.

Consequently, plastic parts of cartridge containers were pulverized flat, roller parts and gear parts of the cartridges were disassembled as they were pulverized, and most of toner in the cartridges was connected by the dust collecting means 42.

As described above, the pulverizing action in the pulverizing step in the vessel 31 disassembles the cartridge containers and cuts the plastic components into predetermined dimensions.

Since the pulverizing vessel has an inclination angle, the pulverized products of the pulverized cartridges in the vessel stay in the right corner in Fig. 7. When the communication door 31c of the vessel X 31 is opened, these pulverized products slip into the separation chamber 38 by the inclination angle of the vessel.

After that, the communication door 31c is closed.

The oxygen concentration in the separation chamber 38 is adjusted in the same manner as in the pulverizing vessel 31.

Immediately after the door 31c is closed, driving of the dust collecting means 48 is started, and supply of nitrogen gas from the nitrogen gas supply pipe 46e is also started.

Toner contained in the cartridges pulverized in the pulverizing vessel 31 is collected by the dust collecting means 42. However, the cartridge containers are not pulverized into small pieces, so a considerable amount of toner still remains in the pulverized plastic pieces.

If the pulverized products in this state are supplied to a material sorting step, the residual toner is also supplied and stick to sorted materials.

In this embodiment, after this pulverizing step, a separation step is performed to increase the efficiency of collection of toner not collected in the pulverizing step.

The components of the pulverized cartridge containers slipped from the pulverizing vessel 31 into the separation chamber 38 are cut by pulverization. Therefore, the parts of the pulverized products are not flat, and many uneven portions are formed in the corners of these containers. Toner remains in these uneven portions. This residual toner is the toner not collected by the dust collecting means 42 in the pulverizing vessel 31.

The separation chamber 38 collects this toner.

The pulverized products slipped from the pulverizing vessel 31 are impacted by the impacting X means 40 in the separation chamber 38.

The impacting means of this embodiment is a rotary blade formed on the bottom of the separation chamber 38. The rotary blade 40 is rotated by the driving means 40a, and the rotation of the blade 40 gives impact to the pulverized products, thereby blowing up the pulverized products staying on the bottom of the separation chamber by the impact. At the same time, toner remaining between these pulverized products is blown up and collected by the dust collecting means 48.

The rotation of the rotary blade of the separation chamber 48 achieves a function different from that of the rotation for pulverization in the pulverizing vessel 31. The rotational speed of this rotary blade is a few revolutions/sec.

The residual toner is collected by blowing up the toner by the impact to the pulverized products in the separation chamber 38. This greatly reduces the amount of toner contained in the pulverized products remaining in the separation chamber 38.

In this embodiment, to effectively collect the residual toner in the separation chamber 38, impact is given by the rotary blade as a separating operation in this separation chamber 38. However, instead of this impact, vibrations may also be given to the pulverized products in the separation chamber.

Although it depends on the degree of pulverization in the pulverizing vessel 31, if products are finely pulverized in the pulverizing step, sorting of plastic materials, rubber materials, metal materials, fiber materials, and the like after that is influenced.

Accordingly, the main purpose of pulverization of toner cartridges in the pulverizing step is not to pulverize plastic containers of the toner cartridges into pieces of a few millimeters, but to break and disassemble the container form of the toner cartridges.

It was, therefore, not easy to completely collect toner in the pulverizing step. Secondary collection of toner in the separation chamber according to this embodiment had favorable effects on separation and sorting of materials after that.

The present invention is not limited to the above embodiments and various changes and modifications can be made within the scope of the present invention. Therefore, to apprise the public of the scope of the present invention, the following claims are made.

## Claims

1. A method of pulverizing a container containing a powder, comprising:
a replacement step of accommodating the container containing the powder in an accommodating member (2, 31), replacing the ambient in the interior of the accommodating member with an inert gas, and
holding the oxygen concentration in the accommodating member at not more than 10%; followed by
an exhaust step of pulverizing the container in the accommodating member, and exhausting the inert gas and the powder in the accommodating member outside the accommodating member during the pulverization;
**characterized in that**, in the replacement step, the accommodating member is closed after accommodating the container therein in an ambient of the atmosphere, and thereafter the ambient of the atmosphere is replaced with the inert gas, and the oxygen concentration in held at no more than 10%.

2. The method according to claim 1, further comprising a supply step of supplying the inert gas into the accommodating member to hold the inert gas concentration constant in the accommodating member.

3. The method according to claim 2, wherein in the supply step, the oxygen concentration in the accommodating member is held at not more than 10% by supplying the inert gas.

4. The method according to any one of claims 1 to 3, wherein a supply amount of inert gas in the supply step is held to be not less than an exhaust amount in the exhaust step.

5. The method according to any one of claims 1 to 4 of, wherein after the container containing the powder is pulverized, the powder is separated from the pulverized product.

6. The method according to any one of claims 1 to 5, wherein after the container containing the powder is pulverized into a predetermined size or pulverized with a predetermined pulverizing force, the powder is collected while impact is given to the pulverized product containing the powder.

7. The method according to claim 6, wherein the impact to the pulverized product is vibration.

8. The method according to claims 6 or 7, wherein the pulverized product is given vibrations in an inert gas ambient.

9. Use of the method according to any one of claims 1 to 8 for pulverizing a cartridge containing toner.

10. Use of the method according to claim 9 for pulverizing a cartridge of an image forming apparatus, wherein after the cartridge of the image forming apparatus is pulverized, toner is separated from the pulverized product.

11. An apparatus for pulverizing a container containing a powder, comprising:
an accommodating member for accommodating the container containing the powder;
pulverizing means (34) for pulverizing the container;
means (46) for replacing the ambient in said accommodating member with an inert gas; and
means (42) for exhausting the inert gas and the powder in said accommodating member;
said accommodating member comprising
a pulverizing chamber (31) for accommodating and pulverizing the container containing the powder; and
an impact giving chamber (38) which, via a communication door (31 c), communicates with said pulverizing chamber, for receiving the pulverized product pulverized in said pulverizing chamber, and giving impact to the pulverized product
**characterized in that** said communication door can be in a closed state during operation of any one of the pulverizing means, the replacing means, the impact giving means and the exhaust means.

12. The apparatus according to claim 11, further comprising means for supplying the inert gas into said accommodating member.

13. The apparatus according to claim 12, further comprising means for controlling an oxygen concentration in said accommodating member

14. The apparatus according to claim 13, wherein said control means further comprises means for measuring the oxygen concentration in said accommodating member.

15. The apparatus according to any one of claims 1 to 14, wherein the pulverizing means is suitable for pulverizing the container containing the powder with a predetermined pulverizing force; and said apparatus further comprises vibrating means for giving vibrations to the pulverized product.

16. The apparatus according to any one of claims 11 to 15, comprising means (46) for setting an inert gas ambient in said pulverization chamber and said impact giving chamber.

## Patentansprüche

1. Verfahren zum Zerkleinern eines Pulver enthaltenden Behälters, umfassend:
einen Austauschschritt zum Aufnehmen des Pulver enthaltenden Behälters in einem Aufnahmeelement (2, 31), zum Austauschen des Umgebungsgases im Inneren des Aufnahmeelements durch ein inertes Gas und zum Halten der Sauerstoffkonzentration im Aufnahmeelement bei nicht mehr als 10 Prozent; gefolgt von
einem Abführschritt des Zerkleinerns des Behälters im Aufnahmeelement und des Abführens von inertem Gas und Pulver im Aufnahmeelement nach draußen aus dem Aufnahmeelement während des Zerkleinerns;
**dadurch gekennzeichnet, dass** beim Austauschschritt das Aufnahmeelement nach Aufnahme des Behälters unter Umgebungsatmosphäre geschlossen und anschließend die Umgebungsatmosphäre durch inertes Gas ausgetauscht wird und die Sauerstoffkonzentration bei nicht mehr als 10 Prozent gehalten wird.

2. Verfahren nach Anspruch 1, das weiterhin einen Zufuhrschritt des Zuführens von inertem Gas in das Aufnahmeelement umfasst, um die Inertgas-Konzentration im Aufnahmeelement konstant zu halten.

3. Verfahren nach Anspruch 2, bei dem im Zufuhrschritt die Sauerstoffkonzentration im Aufnahmeelement durch Zuführen von inertem Gas bei nicht mehr als 10 Prozent gehalten wird.

4. Verfahren nach einem der Ansprüche 1 bis 3, bei dem die Inertgas-Zufuhrmenge im Zufuhrschritt bei nicht weniger als die Abführmenge im Abführschritt gehalten wird.

5. Verfahren nach einem der Ansprüche 1 bis 4, bei dem, nachdem der Pulver enthaltende Behälter zerkleinert worden ist, das Pulver vom zerkleinerten Produkt getrennt wird.

6. Verfahren nach einem der Ansprüche 1 bis 5, bei dem, nachdem der Pulver enthaltende Behälter zu einer vorbestimmten Größe oder mit vorbestimmter Zerkleinerungskraft zerkleinert worden ist, das Pulver gesammelt wird, während das zerkleinerte, das Pulver enthaltende Produkt gestoßen wird.

7. Verfahren nach Anspruch 6, bei dem das Stoßen des zerkleinerten Produkts eine Vibration ist.

8. Verfahren nach Ansprüchen 6 oder 7, bei dem das zerkleinerte Produkt Vibrationen in einer Inertgas-Umgebung ausgesetzt wird.

9. Verwendung des Verfahrens nach einem Ansprüche 1 bis 8 zum Zerkleinern einer Toner enthaltenden Kassette.

10. Verwendung des Verfahrens nach Anspruch 9 zum Zerkleinern einer Kassette einer Bilderzeugungsvorrichtung, wobei, nachdem die Kassette der Bilderzeugungsvorrichtung zerkleinert worden ist, der Toner vom zerkleinerten Produkt getrennt wird.

11. Vorrichtung zum Zerkleinern eines Pulver enthaltenden Behälters, umfassend:
ein Aufnahmeelement zum Aufnehmen des Pulver enthaltenden Behälters;
eine Zerkleinerungseinrichtung (34) zum Zerkleinern des Behälters;
eine Austauscheinrichtung (46) zum Austauschen des Umgebungsgases im Aufnahmeelement durch ein inertes Gas; und
eine Abführeinrichtung (42) zum Abführen von inertem Gas und Pulver im Aufnahmeelement;
wobei das Aufnahmeelement umfasst:
eine Zerkleinerungskammer (31) zur Aufnahme und Zerkleinerung des Pulver enthaltenden Behälters; und
eine Stoßausübungskammer (38), die über eine Verbindungstür (31 c) mit der Zerkleinerungskammer in Verbindung steht, um das zerkleinerte Produkt, das in der Zerkleinerungskammer zerkleinert wird, aufzunehmen und zu stoßen,
**dadurch gekennzeichnet, dass** sich die Verbindungstür während jeglichen Betriebs von Zerkleinerungseinrichtung, Austauscheinrichtung, Stoßausübungseinrichtung und/oder Abführeinrichtung in geschlossenem Zustand befinden kann.

12. Vorrichtung nach Anspruch 11, weiterhin umfassend:
eine Zuführeinrichtung zum Zuführen von inertem Gas in das Aufnahmeelement.

13. Vorrichtung nach Anspruch 12, weiterhin umfassend:
eine Steuereinrichtung zum Steuern der Sauerstoffkonzentration im Aufnahmeelement.

14. Vorrichtung nach Anspruch 13, wobei die Steuereinrichtung weiterhin eine Messeinrichtung umfasst, um die Sauerstoffkonzentration im Aufnahmeelement zu messen.

15. Vorrichtung nach einem der Ansprüche 11 bis 14, wobei die Zerkleinerungseinrichtung den Pulver enthaltenen Behälter mit vorbestimmter Zerkleinerungskraft zu zerkleinern vermag; und weiterhin eine Vibrationseinrichtung vorgesehen ist, um das zerkleinerte Produkt Vibrationen auszusetzen.

16. Vorrichtung nach einem der Ansprüche 11 bis 15, umfassend:
eine Einstelleinrichtung (46) zum Einstellen einer Inertgas-Umgebung in Zerkleinerungskammer und Stoßausübungskammer.

## Revendications

1. Procédé de pulvérisation d'un récipient contenant une poudre, comprenant :
- une étape de remplacement consistant à loger le récipient contenant la poudre dans un élément de logement (2, 31), à remplacer le milieu ambiant à l'intérieur de l'élément de logement par un gaz inerte, et à maintenir la concentration d'oxygène dans l'élément de logement à pas plus de 10 % ; suivie de
- une étape d'évacuation consistant à pulvériser le récipient dans l'élément de logement, et à évacuer le gaz inerte et la poudre, se trouvant dans l'élément de logement, à l'extérieur de l'élément de logement pendant la pulvérisation ;
**caractérisé en ce que**, dans l'étape de remplacement, l'élément de logement est fermé après que le récipient y a été logé dans un milieu ambiant constitué de l'atmosphère et, ensuite, le milieu ambiant constitué de l'atmosphère est remplacé par le gaz inerte, et la concentration d'oxygène est maintenue à pas plus de 10 %.

2. Procédé selon la revendication 1, comprenant en outre une étape d'amenée consistant à amener le gaz inerte dans l'élément de logement afin de maintenir constante la concentration de gaz inerte dans l'élément de logement.

3. Procédé selon la revendication 2, dans lequel, dans l'étape d'amenée, la concentration d'oxygène dans l'élément de logement est maintenue à pas plus de 10 % par l'amenée du gaz inerte.

4. Procédé selon l'une quelconque des revendications 1 à 3, dans lequel une quantité de gaz inerte amenée dans l'étape d'amenée est maintenue de façon à ne pas être inférieure à une quantité évacuée dans l'étape d'évacuation.

5. Procédé selon l'une quelconque des revendications 1 à 4, dans lequel, après que le récipient contenant la poudre a été pulvérisé, la poudre est séparée du produit pulvérisé.

6. Procédé selon l'une quelconque des revendications 1 à 5, dans lequel, après que le récipient contenant la poudre a été pulvérisé en une dimension prédéterminée ou pulvérisé avec une force de pulvérisation prédéterminée, la poudre est collectée tandis qu'un impact est appliqué au produit pulvérisé contenant la poudre.

7. Procédé selon la revendication 6, dans lequel l'impact au produit pulvérisé est une vibration.

8. Procédé selon la revendication 6 ou 7, dans lequel le produit pulvérisé reçoit des vibrations dans un milieu ambiant constitué d'un gaz inerte.

9. Utilisation du procédé selon l'une quelconque des revendications 1 à 8 pour pulvériser une cartouche contenant du toner.

10. Utilisation du procédé selon la revendication 9, pour pulvériser une cartouche d'un appareil de formation d'images, dans laquelle, après que la cartouche de l'appareil de formation d'images a été pulvérisée, du toner est séparé du produit pulvérisé.

11. Appareil pour pulvériser un récipient contenant une poudre, comportant :
- une chambre de logement destinée à loger le récipient contenant la poudre ;
- un moyen de pulvérisation (34) destiné à pulvériser le récipient ;
- un moyen (46) destiné à remplacer le milieu ambiant dans ledit élément de logement par un gaz inerte ; et
- un moyen (42) destiné à évacuer le gaz inerte et la poudre se trouvant dans ledit élément de logement ; ledit élément de logement comportant :
- une chambre de pulvérisation (31) destinée à loger et pulvériser le récipient contenant la poudre ; et
- une chambre (38) d'application d'impact qui communique, par l'intermédiaire d'une porte de communication (31c) avec ladite chambre de pulvérisation, pour recevoir le produit pulvérisé qui est pulvérisé dans ladite chambre de pulvérisation, et pour appliquer un impact au produit pulvérisé,
**caractérisé en ce que** ladite porte de communication peut être dans un état fermé pendant le fonctionnement de l'un quelconque du moyen de pulvérisation, du moyen de remplacement, du moyen d'application d'impact et du moyen d'évacuation.

12. Appareil selon la revendication 11, comportant en outre un moyen destiné à amener le gaz inerte dans ledit élément de logement.

13. Appareil selon la revendication 12, comportant en outre un moyen destiné à régler la concentration d'oxygène dans ledit élément de logement.

14. Appareil selon la revendication 13, dans lequel ledit moyen de réglage comporte en outre un moyen destiné à mesurer la concentration d'oxygène dans ledit élément de logement.

15. Appareil selon l'une quelconque des revendications 11 à 14, dans lequel le moyen de pulvérisation convient à la pulvérisation du récipient contenant la poudre avec une force prédéterminée de pulvérisation ; et ledit appareil comporte en outre un moyen vibrant destiné à appliquer des vibrations au produit pulvérisé.

16. Appareil selon l'une quelconque des revendications 11 à 15, comportant un moyen (46) destiné à établir un milieu ambiant constitué d'un gaz inerte dans ladite chambre de pulvérisation et dans ladite chambre d'application d'impact.
